# EUROPEAN PATENT APPLICATION

(11) **EP 4 653 924 A1**
(43) Date of publication of application: **26.11.2025**
(21) Application number: 25748138.2
(22) Date of filing: 27.01.2025
(51) Int. Cl.: G02B 5/04, G02B 5/06

(54) **PRISM FOR RAINBOW GENERATION**

(30) Priority: 01.02.2024 JP 2024013889
(71) Applicant: Koyo Shoji Co., Ltd., Osaka-shi, Osaka, 546-0002 (JP)
(72) Inventor: OKU Kimio, Osaka-shi, Osaka 546-0002 (JP)
(74) Representative: Carstens, Dirk Wilhelm
(86) International application number: PCT/JP2025/002358
(87) International publication number: WO 2025/164556

(57) **Abstract**

Provided is a rainbow-generating prism capable of easily changing the shape of a rainbow.

In a rainbow-generating prism 100 of the present invention, sunlight is spectrally dispersed to form an arc-shaped rainbow for enjoyment. The rainbow-generating prism 100 includes a solid cylindrical prism body 1 made of a transparent material and support means 2 that supports the prism body 1. The prism body 1 includes, on one end side in the direction of an axis, a bottom surface 11 inclined with respect to the axis. The prism body 1 is provided symmetrically in the direction of a minor diameter 11a of the bottom surface 11. The support means 2 is configured to rotatably support the prism body 1 around an axis parallel to the symmetry direction of the prism body 1. The rainbow-generating prism 100 can easily change the shape of the rainbow to be formed because the prism body 1 can be easily rotated to change the orientation while placed on a desk or a similar surface.

## Description

### BACKGROUND OF THE INVENTION

### Field of the Invention

The present invention relates to a prism for generating a rainbow by spectrally dispersing sunlight, and particularly to a rainbow-generating prism for generating an arc-shaped rainbow, like a natural rainbow in the sky.

### Description of the Related Art

Conventionally, various types of prisms have been proposed in which the cross-section of the surface that reflects or refracts sunlight is shaped into an arc, forming a spectrum that divides sunlight into seven colors in an arc shape. (See, for example, Japanese Utility Model Publication No. 59-48504 and Japanese Patent Laid-Open No. 2001-141914.)

For example, Japanese Utility Model Publication No. 59-48504 discloses a prism having a cylindrical shape, with one end surface as a bottom surface cut at an angle. In the prism of Japanese Utility Model Publication No. 59-48504, parallel rays of light entering through the bottom surface exit through the cylindrical side surface, or parallel rays entering through the cylindrical side surface exit through the bottom surface, to form an arc-shaped rainbow.

In addition, Japanese Patent Laid-Open No. 2001-141914 discloses an artificial rainbow-generating prism that is a triangular prism having one side surface formed as a concave surface including a cylindrical groove. In the prism of Japanese Patent Laid-Open No. 2001-141914, light entering through the planar side surface is reflected by the curved concave surface to form an arc-shaped rainbow.

Moreover, Japanese Patent Laid-Open No. 2006-162913 discloses an artificial rainbow-generating container that has the same shape as Japanese Patent Laid-Open No. 2001-141914 and is configured such that a transparent container with a mirror on a curved concave surface is filled with water. The artificial rainbow-generating container of Japanese Patent Laid-Open No. 2001-141914 has an effect of causing a rainbow to shimmer due to the shimmering of water.

### SUMMARY OF THE INVENTION

However, the prism of Japanese Utility Model Publication No. 59-48504 has a problem in which, since a rainbow is formed while the prism is held by hand, adjusting and fixing the directions of light entry and exit without blocking the light path with the hand is difficult. Furthermore, the rainbow-generating prism of Japanese Patent Laid-Open No. 2001-141914 and the rainbow-generating container of Japanese Patent Laid-Open No. 2006-162913 have a problem in which the orientation of the prism cannot be changed in accordance with changes in the height of the sun. The present invention has been made in view of such problems, and an object of the present invention is to provide a rainbow-generating prism capable of easily changing its orientation with respect to the direction of sunlight entry to find an orientation allowing rainbow formation, and capable of easily forming rainbows with different orientations and positions by changing the orientation of the prism.

The invention made to solve the above problems is a rainbow-generating prism capable of forming an arc-shaped rainbow by spectrally dispersing sunlight, the rainbow-generating prism including: a prism body made of a transparent material and having a solid cylindrical shape, the prism body including, on at least one end side in a direction of an axis, an elliptical bottom surface inclined with respect to the axis, the prism body being provided symmetrically with respect to a minor diameter direction of the elliptical bottom surface; and support means that rotatably supports the prism body around an axis parallel to a direction of the symmetry of the prism body.

As described above, the rainbow-generating prism of the present invention includes the prism body formed in a cylindrical shape from a transparent solid material, with the elliptical bottom surface on one end side. Therefore, light entering through the cylindrical side surface undergoes total reflection on the elliptical bottom surface, enabling the formation of an arc-shaped rainbow. In the present invention, since the support means is included to rotatably support the prism body around the axis parallel to the symmetry direction of the prism body, the prism body can be easily changed in its orientation with, for example, one hand while placed on the floor. In this manner, the angle at which sunlight enters the prism can be changed, enabling an easy change in the orientation and position of the rainbow, such as moving the location where the rainbow is formed from the wall to the ceiling, or changing an upright rainbow to an inverted rainbow. Moreover, the orientation of the prism body in which sunlight undergoes total reflection on the bottom surface can be easily found, so that a dense and beautiful rainbow can be formed.

The rainbow-generating prism of the present invention includes a rainbow-generating prism capable of forming an arc-shaped rainbow by spectrally dispersing sunlight, the rainbow-generating prism including: a prism body including a container made of a transparent material and having a hollow cylindrical shape with an elliptical bottom wall on one end side in a direction of an axis, the elliptical bottom wall being inclined with respect to the axis, the prism body being provided symmetrically with respect to a minor diameter direction of the elliptical bottom surface; and support means that rotatably supports the prism body around an axis parallel to a direction of the symmetry of the prism body. In this manner, when the container forming the prism body is filled with a transparent liquid such as water, a rainbow can be formed using the container as a prism. At this time, when a rainbow is formed by light passing through the liquid surface, the rainbow can shimmer by causing the water to shimmer. When the orientation of the prism body is changed by the support means, even if the angle of the bottom wall with respect to the horizontal direction is changed, the upper surface of the prism formed by the liquid surface is kept horizontal, and the angle formed between the upper surface of the prism and the bottom wall can thus be changed. This makes it possible to enjoy a different rainbow formation method compared to the above rainbow-generating prism made entirely of a transparent material.

It is preferable that the support means be capable of continuously rotating the prism body around the axis. In this manner, the orientation of the prism can be finely adjusted to continuously change the position and shape of the rainbow to be formed.

It is preferable that the support means be capable of rotating the prism body stepwise around the axis. In this manner, the orientation of the prism body can be changed in a plurality of stages to form a plurality of types of rainbows with different positions and shapes for enjoyment.

As described above, according to the rainbow-generating prism of the present invention, the orientation of the prism body can be easily changed to form rainbows with different positions and shapes.

### BRIEF DESCRIPTION OF THE DRAWINGS

FIG. 1 is a perspective view showing how sunlight forms an inverted rainbow in a rainbow-generating prism according to a first embodiment of the present invention;
FIG. 2(a) is a side view showing how sunlight is reflected and refracted in FIG. 1, and FIG. 2(b) is a component view showing the bottom surface of a prism body in the X-X view of FIG. 1;
FIG. 3 is a plan view showing how sunlight entering the prism body at each of two different points is reflected and refracted in the rainbow-generating prism shown in FIG. 1;
FIG. 4 is a perspective view showing how sunlight forms an upright rainbow on the ceiling in the rainbow-generating prism shown in FIG. 1, with the upper surface of the prism body facing the sun;
FIG. 5 is a side view showing how sunlight is reflected and refracted in FIG. 4;
FIG. 6 is a plan view showing how sunlight entering the prism body at each of two different points is reflected and refracted in the rainbow-generating prism shown in FIG. 4;
FIG. 7 is a perspective view showing how light forms an upright rainbow in a rainbow-generating prism according to a second embodiment of the present invention;
FIG. 8 is a cross-sectional side view showing how sunlight is reflected and refracted in FIG. 7;
FIG. 9 is a plan view showing how sunlight entering the prism body at each of two different points is reflected and refracted in the rainbow-generating prism shown in FIG. 7;
FIG. 10 is a cross-sectional side view showing how sunlight is reflected and refracted when the prism body of the rainbow-generating prism shown in FIG. 7 is tilted rearward (to the side opposite the sun, to the right in FIG. 10);
FIG. 11 is a perspective view showing how sunlight entering the prism body at each of two different points is reflected and refracted in the rainbow-generating prism shown in FIG. 10, and an inverted rainbow formed on the ceiling;
FIG. 12 is a perspective view of a rainbow-generating prism according to a third embodiment of the present invention;
FIG. 13 is a cross-sectional side view showing how sunlight is reflected and refracted in the rainbow-generating prism shown in FIG. 12;
FIG. 14 is a cross-sectional side view showing how sunlight is reflected and refracted in a state where the prism body shown in FIG. 12 is inclined rearward (to the right in FIG. 14);
FIG. 15 is a cross-sectional side view showing how sunlight is reflected and refracted in a state where the prism body in FIG. 12 is inclined forward (to the left in FIG. 15);
FIG. 16(a) is a perspective view of a rainbow-generating prism according to a fourth embodiment of the present invention, FIG. 16(b) is a longitudinal cross-sectional view showing how sunlight is reflected and refracted in a state where a prism body is not inclined, and FIG. 16(c) is a longitudinal cross-sectional view showing how sunlight is reflected and refracted in a state where the prism body is inclined; and
FIG. 17 is a longitudinal cross-sectional view of a rainbow-generating prism according to a fifth embodiment of the present invention.

### DETAILED DESCRIPTION OF THE INVENTION

Embodiments of the present invention will be described in detail below with reference to drawings as appropriate. However, the present invention is not limited to the following embodiments.

### (First Embodiment)

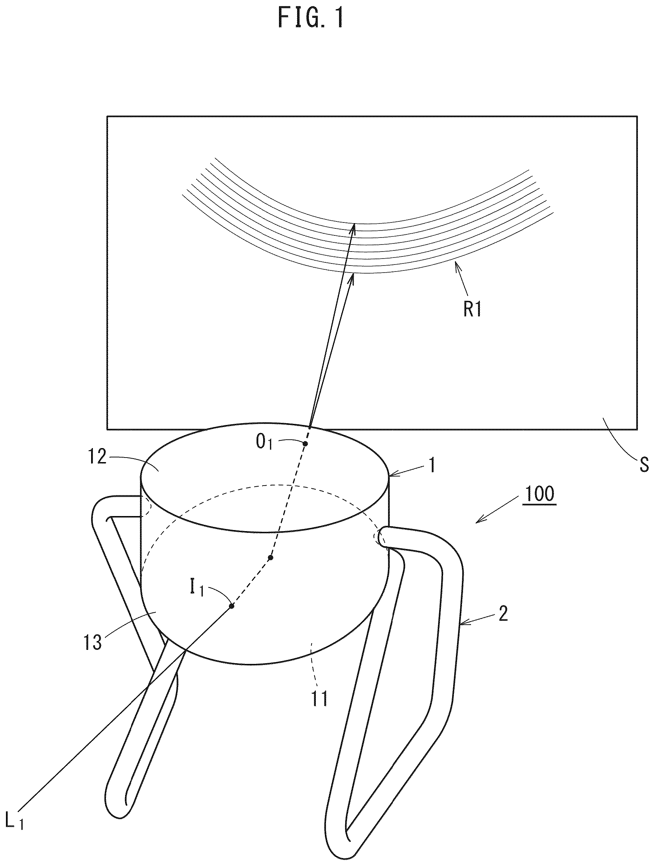

FIG. 1 shows a rainbow-generating prism 100 according to a first embodiment of the present invention. The rainbow-generating prism 100 includes a prism body 1 and support means 2, and the prism body 1 is provided to be able to form an arc-shaped rainbow R1 by spectrally dispersing sunlight.

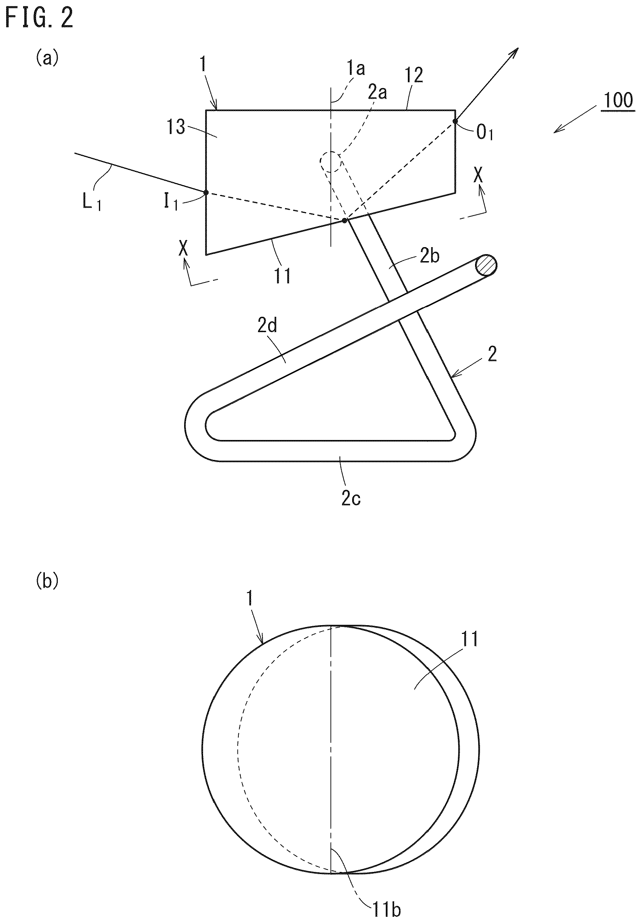

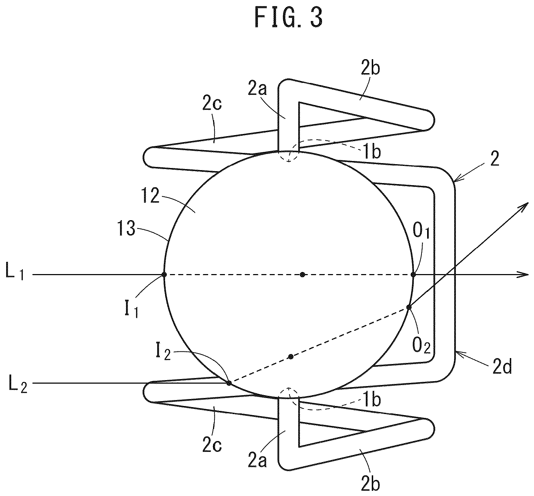

The prism body 1 is made of a transparent material and has a solid cylindrical shape. As shown in FIG. 2, the prism body 1 includes an elliptical surface (see FIG. 2(b)) that is a bottom surface 11 provided on one end side (lower side in FIG. 2) in the direction of an axis 1a and inclined with respect to the axis 1a. In the illustrated example, an upper surface 12 on the other end side (upper side in FIG. 2(a)) in the direction of the axis 1a is provided as a circular surface perpendicular to the axis 1a. The prism body 1 is symmetrically provided with respect to the left-right direction (vertical direction in FIGS. 2(b) and 3) parallel to a minor diameter 11b of the elliptical bottom surface 11. As shown in FIG. 3, pivoting recesses 1b, 1b fitted to the ends of shaft portions 2a, 2a of the support means 2, which will be described later, are provided on both the left and right sides of a side surface 13 of the prism body 1. As long as the symmetry of the prism body 1 is maintained, the upper surface 12 of the prism body 1 may be an elliptical surface inclined with respect to the axis 1a of the prism body 1 (see FIG. 2). Examples of the transparent material forming the prism body 1 may include glass, acrylic resin, and polycarbonate, with acrylic resin being preferred due to its high transparency and ease of processing.

The support means 2 is integrally formed by bending a metal rod such as stainless steel. As shown in FIG. 3, the support means 2 includes: a pair of shaft portions 2a, 2a extending in the left-right direction of the prism body 1 and rotatably supporting the prism body 1; pillar portions 2b, 2b extending obliquely downward and rearward from the pair of right and left shaft portions 2a, 2a; base portions 2c, 2c extending forward from the lower ends of the pair of right and left pillar portions 2b, 2b; and a U-shaped portion 2d extending obliquely rearward and upward from the front ends of the base portion 2c, 2c and connected in the rear.

### (Formation of inverted rainbow R1 in First Embodiment)

FIGS. 1 to 3 show how sunlight enters and exits through the side surface 13 of the prism body 1 in the front-rear direction in a state with the axis 1a (see FIG. 2) of the prism body 1 in the vertical position. FIGS. 1 to 3 show light L1 of the sunlight entering the prism body 1, the light L1 entering the prism body 1 at an incident point I1 at the center in the left-right direction (vertical direction in FIG. 3) on the front side of the cylindrical side surface 13.

As shown in FIG. 2, when entering the prism body 1, the light L1 is refracted upward at the incident point I1, then travels straight, undergoes total reflection on the bottom surface 11, and exits the prism body 1 at the exit point O1 in the rear of the side surface 13. The outgoing light L1 is refracted upward at the exit point O1. The light L1 is spectrally dispersed each time the light L1 undergoes refraction and reflection, forming the rainbow R1 on a vertical screen S, as shown in FIG. 1. The rainbow R1 projected onto the vertical screen S by the light L1 is formed as an inverted rainbow curved downward. FIG. 3 shows, in addition to the light L1 entering at the incident point L1 at the center in the left-right direction of the side surface 13 of the prism body 1, how light L2 is refracted and reflected by the prism body 1, the light L2 entering at an incident point I2 on the right side in the left-right direction of the side surface 13 (lower side in FIG. 3) and exiting the prism body 1 at an exit point O2 on the rear side of the side surface 13 of the prism body 1. The light L2 entering the prism body 1 from the left side (lower side in FIG. 3) is refracted and exits toward the right side (upper side in FIG. 3).

### (Formation of upright rainbow R2 in First Embodiment)

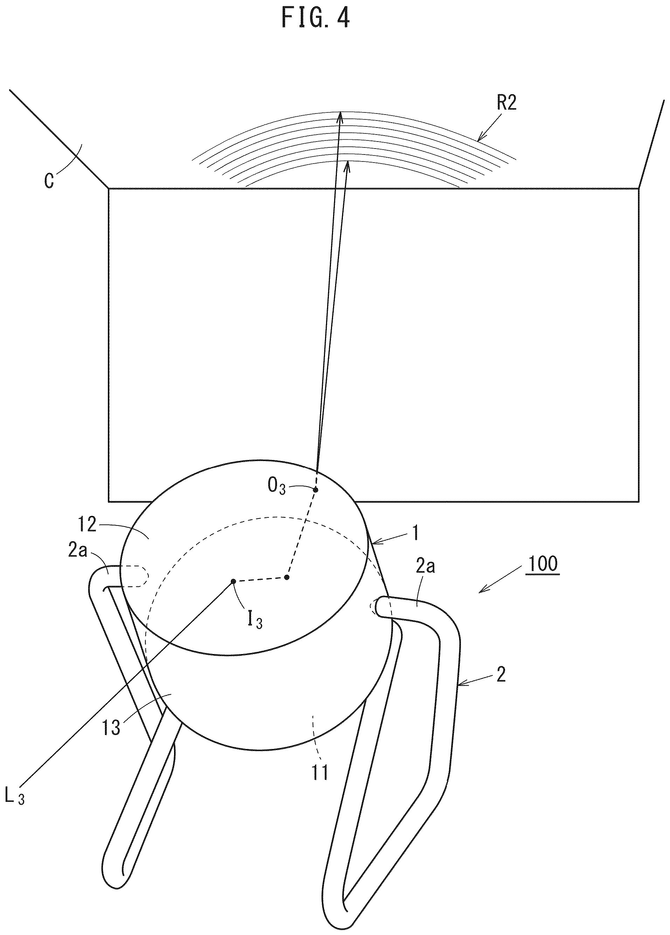

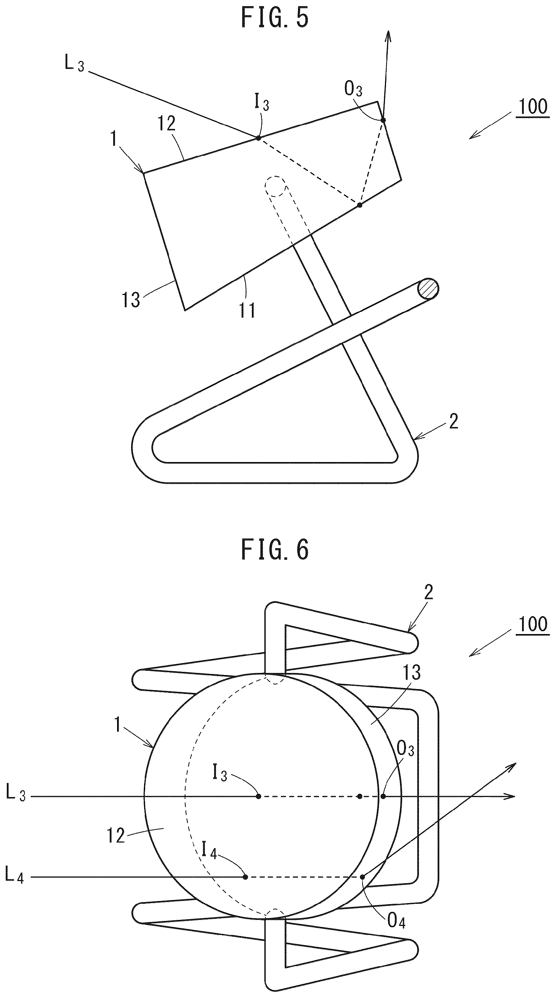

FIGS. 4 to 6 show how a rainbow R2 is formed by light L3 entering through the upper surface 12, with the prism body 1 inclined forward (front side in FIG. 4 and left side in FIG. 5) by rotation around the shaft portions 2a, 2a, and the upper surface 12 of the prism body 1 facing forward.

As shown in FIG. 5, the light L3 entering the prism body 1 at an incident point I3 at the center in the left-right direction of the upper surface 12 is refracted downward at the incident point I3, then travels straight, undergoes reflection on the bottom surface 11, and exits the prism body 1 at the exit point O3 in the rear of the side surface 13. The outgoing light L3 is refracted upward at the exit point O3. Thus, the light O3 exits in a generally vertical direction, so that the rainbow R2 is projected onto a ceiling C, as shown in FIG. 4. As shown in FIG. 4, the rainbow R2 is formed as an upright rainbow curved toward the front side. FIG. 6 shows, in addition to the light L3 entering at the incident point I3 at the center in the left-right direction of the side surface 13 of the prism body 1, how light L4 is refracted and reflected by the prism body 1, the light L4 entering at an incident point I4 on the right side in the left-right direction of the side surface 13 (lower side in FIG. 6) and exiting the prism body 1 at an exit point O4 on the rear side of the side surface 13 of the prism body 1. The light L4 entering the prism body 1 from the left side (lower side in FIG. 6) is refracted and exits toward the right side (upper side in FIG. 6).

### (Second Embodiment)

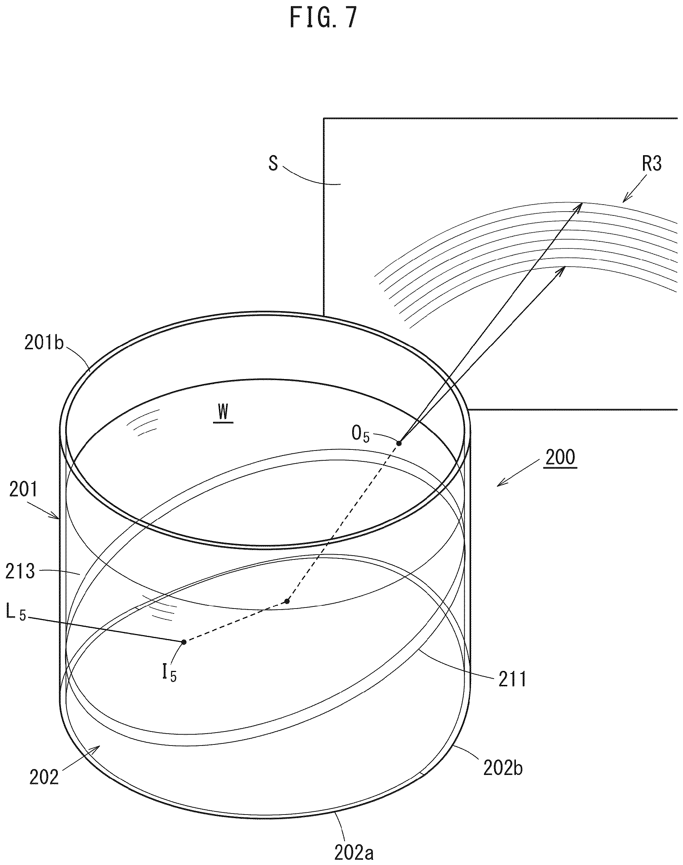

FIG. 7 shows a rainbow-generating prism 200 according to a second embodiment of the present invention. The rainbow-generating prism 200 includes a prism body 201 that is made of a transparent material such as glass, acrylic, or carbonate, and has a hollow cylindrical shape to serve as a prism when filled with a transparent liquid such as water, and support means 202 that supports the prism body 201.

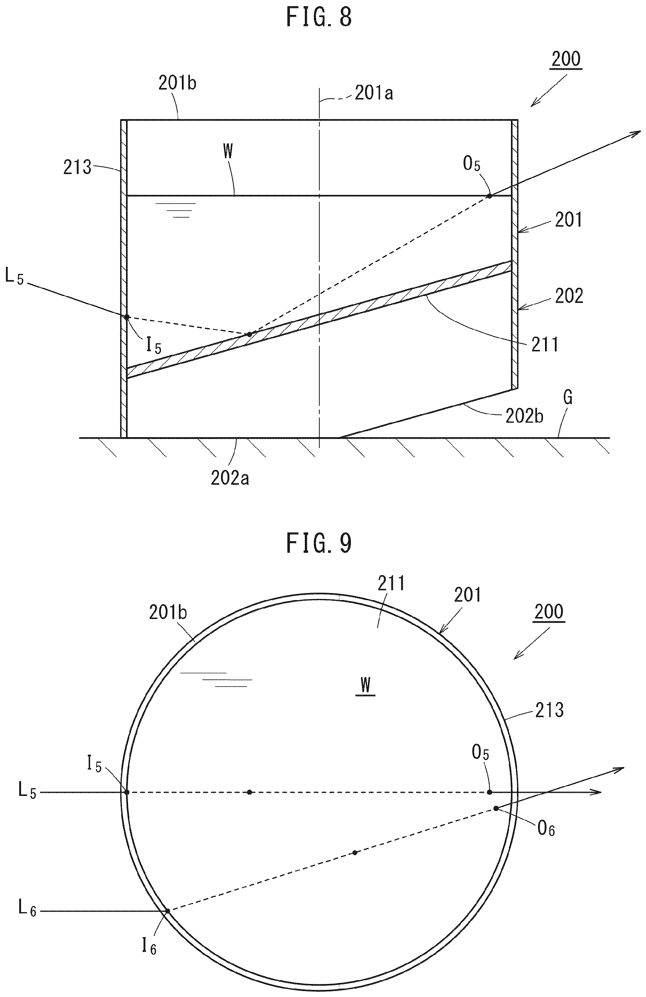

The prism body 201 includes a cylindrical side wall 213 and a bottom wall 211 and has an upwardly open container shape. An upper edge 201b of the side wall 213 is provided perpendicular to an axis 201a (see FIG. 8) of the cylindrical side wall 213, and the bottom wall 211 has an elliptical shape inclined with respect to the axis 201a. The prism body 201 is provided symmetrically with respect to the minor diameter direction of the elliptical bottom wall 211 (vertical direction in FIG. 9).

The support means 202 is integrally formed in a cylindrical shape with the cylindrical side wall 213 of the prism body 201. As shown in FIG. 8, the support means 202 includes a first grounding portion 202a and a second grounding portion 202b at the bottom edge.

The first grounding portion 202a forms the front half (left side in FIG. 8) of the bottom edge of the cylindrical support means 202, is provided in a semicircular shape in a bottom view (not shown), and is provided in a plane perpendicular to the axis 201a of the prism body 201. The first grounding portion 202a comes into contact with a horizontal plane G when the rainbow-generating prism 200 is placed on the horizontal plane G with the axis 201a in the vertical direction.

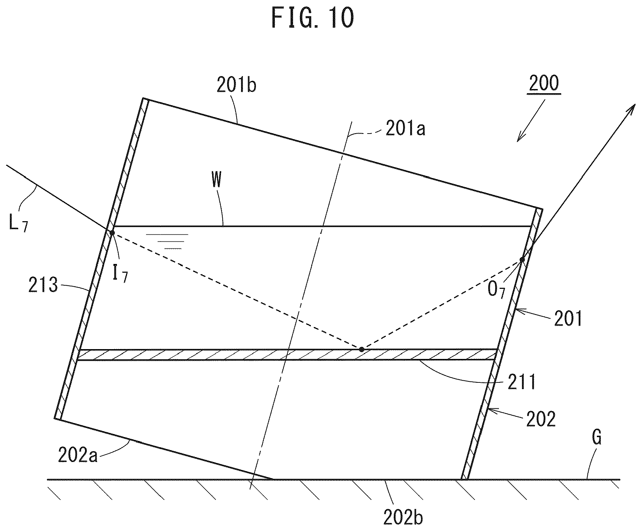

The second grounding portion 202b is provided adjacent to the first grounding portion 202a and inclined with respect to the axis 201a of the prism body 201. As shown in FIG. 10, the second grounding portion 202b is grounded on the horizontal plane G in a state where the prism body 201 is inclined rearward to support the prism body 201.

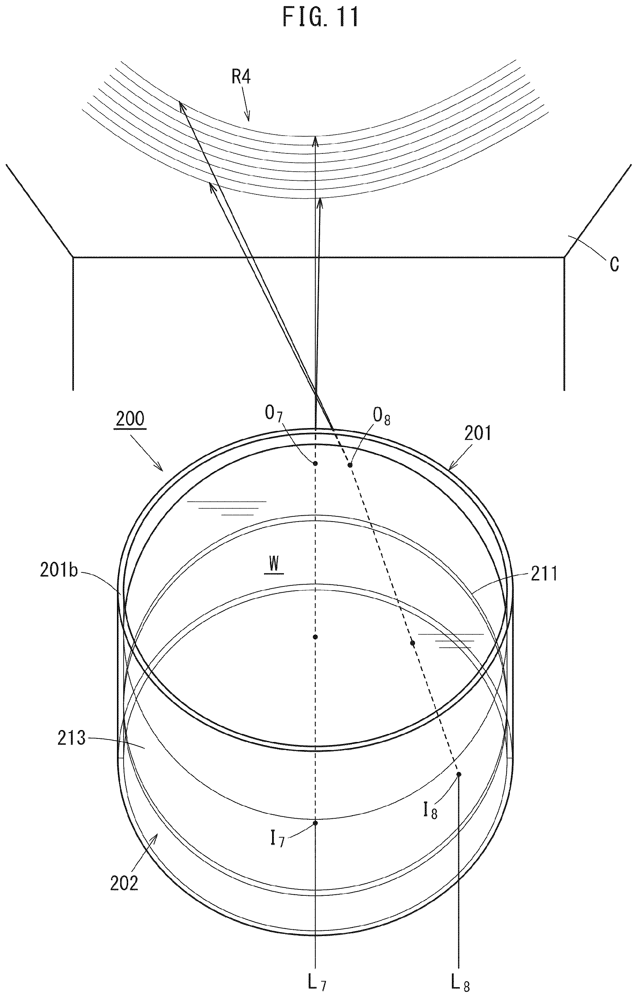

The first grounding portion 202a and the second grounding portion 202b are provided symmetrically with respect to the minor diameter direction of the bottom wall 211 (left-right direction in FIG. 11), and the rainbow-generating prism 200 as a whole is also provided symmetrically with respect to the minor diameter direction of the bottom wall 211. By changing the grounding position of the support means 202 between the first grounding portion 202a and the second grounding portion 202b as described above, the prism body 201 rotates around an axis parallel to the minor diameter direction of the bottom wall 21 and changes its orientation.

### (Formation of upright rainbow R3 in Second Embodiment)

FIGS. 7 to 9 show how sunlight enters the prism body 201 filled with water W, with the rainbow-generating prism 200 installed so that the first grounding portion 202a is in contact with the horizontal plane G. FIGS. 7 to 9 show light L5 of sunlight entering the prism body 201, the light L5 entering at an incident point I5 at the center in the left-right direction of the side wall 213 (vertical direction in FIG. 9) and exiting at the exit point O5 of the water surface. Here, the incident point and the exit point refer to the points where the light enters or exits the water W stored in the prism body 201.

As shown in FIG. 8, when the light L5 entering at the incident point I5 enters the water W in the prism body 201, the light L5 is refracted upward at the incident point I5, then travels straight, is reflected by the bottom wall 211, and exits at the exit point O5 of the water surface. The outgoing light L5 is refracted downward at the exit point O5. A rainbow R3 projected onto the vertical screen S by the light L5 is formed as an upright rainbow R3 curved upward, as shown in FIG. 7. FIG. 9 shows, in addition to the light L5 entering at the incident point L5 at the center in the left-right direction of the side surface 213 of the prism body 201 (vertical direction in FIG. 9), how light L6 is refracted and reflected by the prism body 201, the light L6 entering at an incident point I6 on the right side in the left-right direction of the side surface 213 (lower side in FIG. 9) and exiting the prism body 1 at an exit point O6 on the rear side of the side surface 213 of the prism body 1. The light L6 entering the prism body 201 from the left side (lower side in FIG. 9) is refracted and exits toward the right side (upper side in FIG. 9).

### (Formation of inverted rainbow R4 in Second Embodiment)

FIGS. 10 and 11 show how sunlight enters and exits through the side wall 213 of the prism body 201 in the front-rear direction in a state where the prism body 201 is inclined backward (right side in FIG. 8) from the orientation shown in FIG. 8, and the second grounding portion 202b is grounded on the horizontal plane G. FIG. 10 shows light L7 of sunlight entering the prism body 201, the light L7 entering the prism body 201 at an incident point I7 at the center in the left-right direction (vertical direction in FIG. 11) on the front side of the cylindrical side wall 213 and exiting at the exit point O7 on the rear side of the side wall 213.

As shown in FIG. 10, when the light L7 entering at the central incident point I7 at the center in the left-right direction enters the water W in the prism body 201, the light L7 is refracted upward at the incident point O7, then travels straight, undergoes total reflection on the bottom wall 211, and exits the prism body 201 at the exit point O7 in the rear of the side wall 213. The outgoing light L7 is refracted upward at the exit point O7. As shown in FIG. 11, a rainbow R4 projected onto the ceiling C by the light L7 is formed as an inverted rainbow R4 curved to the inner side (the inner side of the drawing in FIG. 11). As shown in FIG. 11, the light O8 entering at an incident point I8 on the right side of the side surface 213 and exiting at the exit point O8 is refracted and exits toward the left side.

### (Third Embodiment)

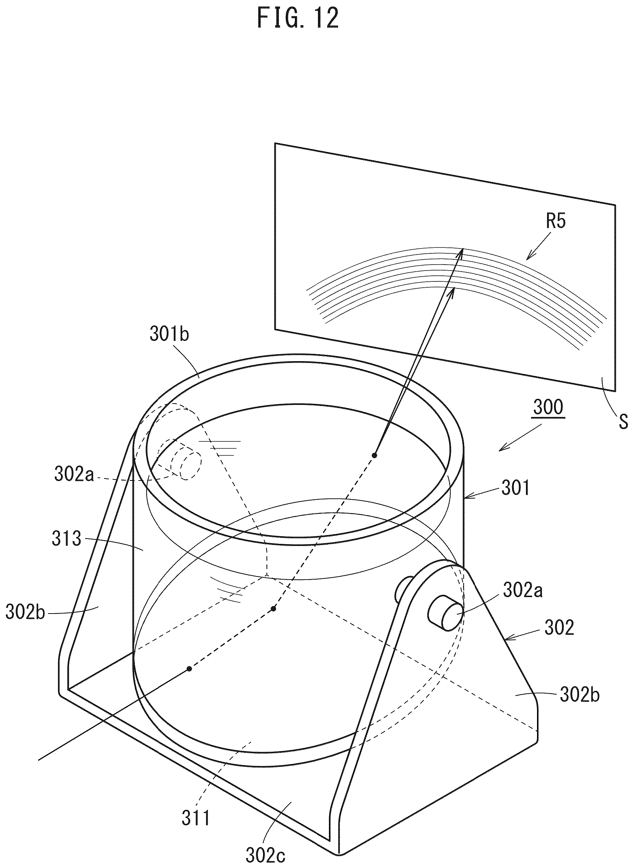

FIG. 12 shows a rainbow-generating prism 300 according to a third embodiment of the present invention. The rainbow-generating prism 300 includes a container-shaped prism body 301 that serves as a prism when filled with a transparent liquid such as water, similar to the rainbow-generating prism 200 of the second embodiment. However, unlike the second embodiment, support means 302 that supports the prism body 301 is provided separately from the prism body 301.

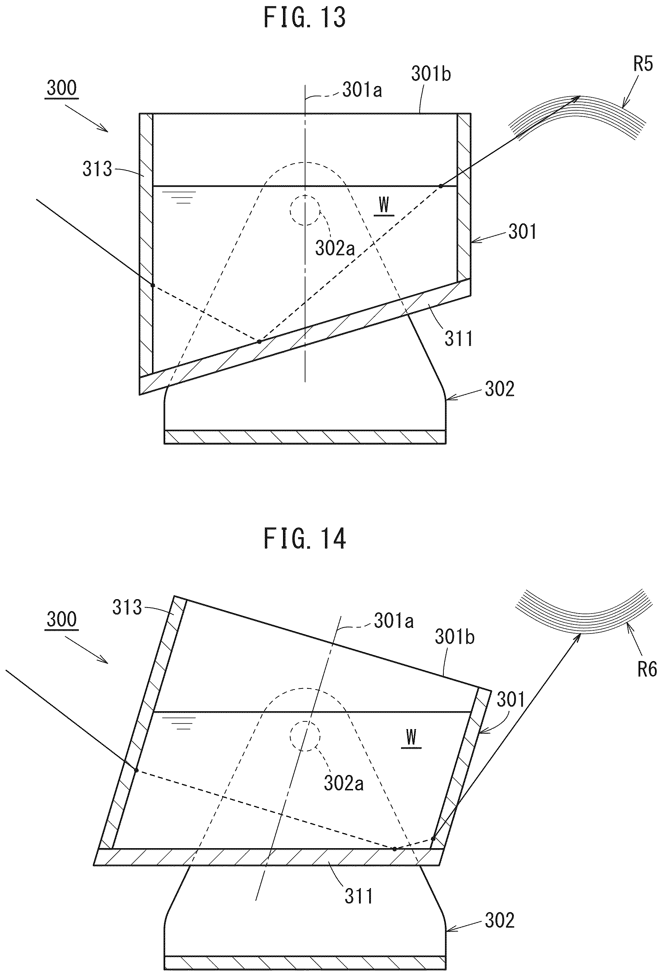

As shown in FIG. 12, the prism body 301 includes a cylindrical side wall 313 and a bottom wall 311 and has an upwardly open container shape. As shown in FIG. 13, an upper edge 301b of the side wall 313 is provided perpendicularly to an axis 301a (see FIG. 13) of the cylindrical side wall 313, and the bottom wall 311 has an elliptical shape inclined with respect to the axis 301a. The prism body 301 is provided symmetrically with respect to the minor diameter direction of the elliptical bottom wall 311 (toward the inner side of the drawing in FIG. 13).

As shown in FIG. 12, the support means 302 includes: a pair of right and left shaft portions 302a, 302a that support the prism body 301 to be rotated around an axis extending in the minor diameter direction of the elliptical bottom wall 311; a pair of right and left shaft supports 302b, 302b that support the respective shaft portions 302a, 302a; and a rectangular plate-shaped base portion 302c that connects the lower ends of the shaft supports 302b, 302b. The shaft support 302b has a substantially triangular plate shape and is provided perpendicular to the base 302c.

FIGS. 12 and 13 show how sunlight enters and exits the prism body 301, which is filled with water W, with the axis 301a oriented vertically to form an upright rainbow R5. The mechanism for forming the rainbow R5 is the same as the mechanism for forming the upright rainbow R3 in the second embodiment of FIG. 7.

FIG. 14 shows how sunlight enters and exits the prism body 301 to form an inverted rainbow R6 in a state where the prism body 301 has been rotated around the shaft portion 302a to tilt the axis 301a rearward from the state in FIG. 13. The mechanism for forming the inverted rainbow R6 in FIG. 14 is the same as the mechanism for forming the inverted rainbow R4 in the second embodiment of FIGS. 10 and 11.

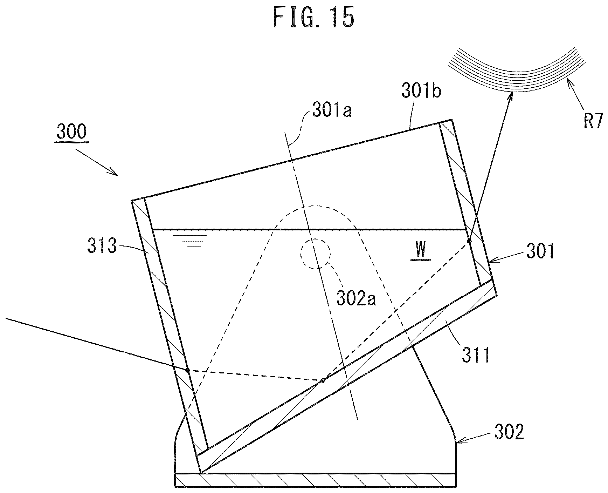

Moreover, FIG. 15 shows how sunlight enters and exits the prism body 301 to form an inverted rainbow R7 in a state where the prism body 301 has been rotated around the shaft portion 302a to tilt the axis 301a forward from the state in FIG. 13. The mechanism for forming the inverted rainbow in FIG. 15 is the same as the mechanism for forming the inverted rainbow R1 in the first embodiment of FIG. 1. In this manner, the prism body 301 can be easily rotated around the axis extending in the symmetric direction of the prism body 301, enabling rainbows with different orientations and sizes to be easily formed for enjoyment.

### (Fourth Embodiment)

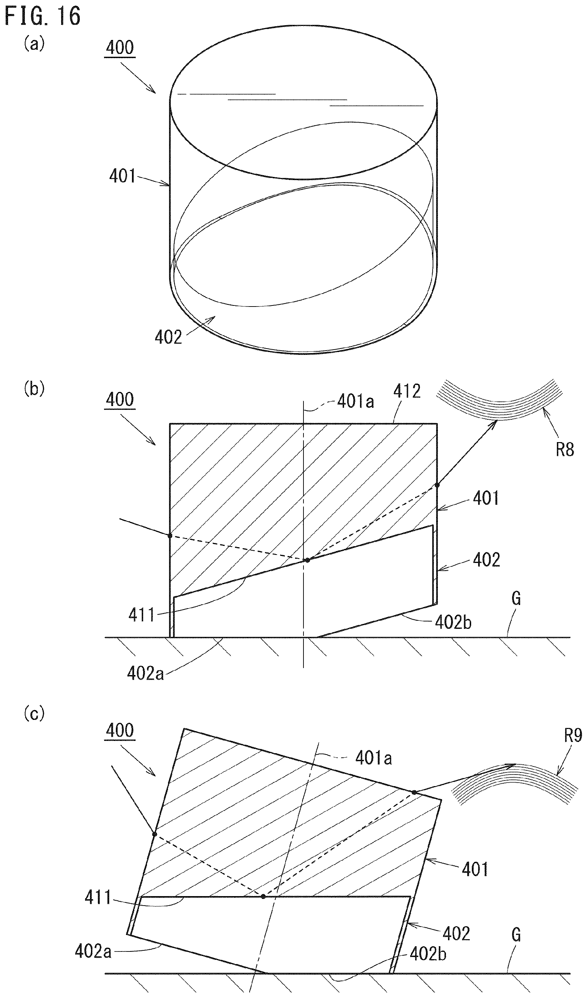

FIG. 16 shows a rainbow-generating prism 400 according to a fourth embodiment of the present invention. The rainbow-generating prism 400 includes: a prism body 401 formed in a solid cylindrical shape from a transparent material, similar to the prism body 1 of the first embodiment; and a cylindrical support means 402, similar to the support means 202 of the second embodiment.

The prism body 401 includes a bottom surface 411 that is an elliptical surface inclined with respect to the axis 401a of the prism body 401, and an upper surface 412 that is a circular surface perpendicular to the axis 401a of the prism body 401.

The support means 402 includes, at its bottom edge, a first grounding portion 402a provided perpendicular to the axis 401a, and a second grounding portion 402b inclined with respect to the axis 401a and the first grounding portion 402a. In the rainbow-generating prism 400 of the fourth embodiment, as shown in FIGS. 16(b) and 16 (c), change in orientation enables rainbows R8, R9 with different orientations to be formed for enjoyment.

### (Fifth Embodiment)

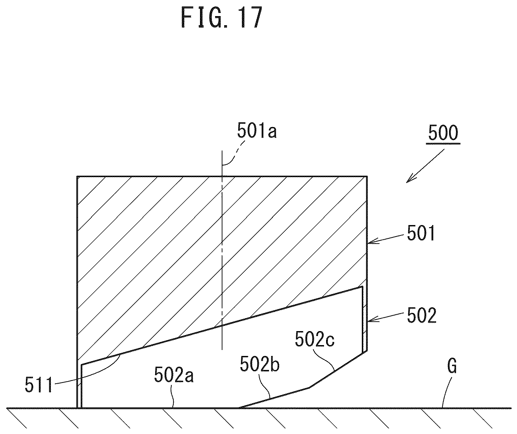

FIG. 17 shows a rainbow-generating prism 500 according to a fifth embodiment of the present invention. The rainbow-generating prism 500 includes a solid cylindrical prism body 501 and a cylindrical support means 502. The support means 502 includes a first grounding portion 502a perpendicular to an axis 501a of the prism body 501, and second and third grounding portions 502b, 502c inclined at different angles with respect to the axis 501a at the bottom edge thereof, so that the angle of the axis 501a can be changed in three steps.

As described above, the rainbow-generating prism of the present invention is not limited to the embodiments described above, and for example, both ends of the solid prism body may be elliptical surfaces inclined with respect to the axis of the prism body. In any of the embodiments where the prism body and the support means are integrally provided, the prism body and the support means may be provided separately. The container-shaped prism may be provided with a lid. The liquid used to fill the container-shaped prism body is not limited to water, as long as the liquid is transparent.

### Reference Signs List

L1, L2, L3, L4, L5, L6, L7, L8 sunlight
R1, R2, R3, R4, R5, R6, R7, R8, R9 rainbow
100, 200, 300, 400, 500 rainbow-generating prism
1a, 201a, 301a, 401a, 501a axis
11, 411, 511 bottom surface
211, 311 bottom wall (bottom surface)
11b minor diameter
1, 201, 301, 401, 501 prism body
2, 201, 302, 402, 502 support means

## Claims

1. A rainbow-generating prism capable of forming an arc-shaped rainbow by spectrally dispersing sunlight, the rainbow-generating prism comprising:
a prism body made of a transparent material and having a solid cylindrical shape, the prism body including, on at least one end side in a direction of an axis, an elliptical bottom surface inclined with respect to the axis, the prism body being provided symmetrically with respect to a minor diameter direction of the elliptical bottom surface; and
support means that rotatably supports the prism body around an axis parallel to a direction of the symmetry of the prism body.

2. A rainbow-generating prism capable of forming an arc-shaped rainbow by spectrally dispersing sunlight, the rainbow-generating prism comprising:
a prism body including a container made of a transparent material and having a hollow cylindrical shape with an elliptical bottom wall on one end side in a direction of an axis, the elliptical bottom wall being inclined with respect to the axis, the prism body being provided symmetrically with respect to a minor diameter direction of the elliptical bottom surface; and
support means that rotatably supports the prism body around an axis parallel to a direction of the symmetry of the prism body.

3. The rainbow-generating prism according to claim 1 or claim 2, wherein the support means is capable of continuously rotating the prism body around the axis.

4. The rainbow-generating prism according to claim 1 or claim 2, wherein the support means is capable of rotating the prism body stepwise around the axis.
